# EUROPEAN PATENT SPECIFICATION

(11) **EP 2 567 137 B1**
(45) Date of publication and mention of the grant of the patent: **09.04.2014**
(21) Application number: 11720343.0
(22) Date of filing: 04.05.2011
(51) Int. Cl.: F16L 37/20, F16L 37/248, F16L 55/115, F16L 37/18

(54) **COUPLING DEVICE, LINE PATH AND LINE END SECTION**
KUPPLUNGSVORRICHTUNG, LEITUNGSWEG UND LEITUNGSENDE
DISPOSITIF DE RACCORDEMENT, CHEMIN DE CONDUIT ET SECTION DE FIN DE CONDUIT

(30) Priority: 04.05.2010 NL 2004665
(43) Date of publication of application: 13.03.2013
(73) Proprietor: Van Der Valk, Andries, 2026 ZC Haarlem (NL)
(72) Inventor: Van Der Valk, Andries, 2026 ZC Haarlem (NL)
(74) Representative: Nederlandsch Octrooibureau
(86) International application number: PCT/NL2011/050303
(87) International publication number: WO 2011/139152

(56) References cited:
- GB-A- 1 085 054
- GB-A- 2 211 258

## Description

The present invention relates to a coupling device for connecting and/or closing off fluid lines, comprising:
- A male coupling element having a substantially circular cross section, at least one continuous recess provided around the outer circumference and at least one projection which extends substantially radially;
- A female coupling element which has a wall with a substantially circular cross section which surrounds a receiving space in which the male coupling element can be accommodated in a fitted manner, wherein the female coupling element has at least one arm which, at one end, comprises an operating element and, at an opposite end, at least one radially extending locking element, wherein the arm is rotatably connected to the female coupling element, wherein the wall has at least one recess through which the locking element can extend into the receiving space, wherein the arm can be brought into a first and a second position, wherein, in the first position, the locking element is situated substantially outside the receiving space and the male coupling element can be brought freely into and/or out of the receiving space, wherein, in the second position, it extends substantially inside the receiving space and engages with the at least one continuous recess provided around the outer circumference of the male coupling element, as a result of which a connection between the coupling elements is established in the position in which the coupling elements are accommodated entirely inside one another;
- A bayonet fastening in which the wall of the female coupling element comprises at least a labyrinth-like guide, wherein the labyrinth-like guide comprises at least one entrance which opens in a free peripheral edge of the wall, at least one guide part which extends substantially in the axial direction from the entrance and at least one guide part which adjoins the axial guide part and extends substantially in the circumferential direction, wherein the radial projection, via the entrance in the axial guide part and the guide part extending in the circumferential direction, can be positioned in the labyrinth-like guide in order to establish the bayonet fastening, the guide part which extends substantially in the circumferential direction is locally widened in the axial direction to form at least one stop, wherein the male and female coupling elements accommodated inside one another can be brought into a position in which the radial projection and the at least one stop overlap one another in such a manner that a movement of the male coupling element substantially in the circumferential direction is limited and that it is possible to prevent an uncontrolled force directed in the axial and/or circumferential direction from taking the radial projection past the at least one stop.

The invention also relates to a line path and a line end section in which the coupling device according to the present invention is accommodated.

Such a coupling device for connecting liquid-carrying hoses is known from GB 2211258 A. This coupling device, which is generally known and referred to as a cam-and-groove coupling and/or cam lock coupling, comprises a hollow male part provided with a continuous recess provided on the outer circumference, a female part which is provided with a receiving space in which the male part can be accommodated. The female part furthermore comprises one or more arms which are provided, at one end, with a cam, wherein the cam is situated outside the receiving space of the female part in a first position and the male part can be freely moved into and/or out of the receiving space of the female part. By rotation, the arms can be brought into a second position, wherein the cams extend inside the receiving space when the male part is situated in the receiving space of the female part and can engage with the continuous recess provided in the outer circumference of the male part. As a result, the coupling device is fastened and a connection between the male and the female part is brought about.

The male part of the known coupling device furthermore comprises a pin which can be accommodated in a duct which is provided in the wall of the female part which surrounds the receiving space. The bayonet fastening which is formed in this way can prevent the male and the female parts of the coupling device from flying apart when the arms are moved from the second to the first position while the hoses are (still) under pressure.

A drawback of the coupling device known from GB 2211258 A is that when the arms of the coupling device, be it knowingly or inadvertently, are moved from the second to the first position and the connection between the male and the female part has been broken, the bayonet fastening could, at least partly, be rotated open, for example due to torsion which is present in the connected hoses. As a result, the bayonet fastening will offer at least a limited degree of protection against flying apart of the male and female parts of the coupling device due to the pressure under which these parts are when a liquid still flows through the coupled hoses. Thus, there is a risk of injury to people and/or damage to infrastructure in the area surrounding the male and female parts of the coupling device which fly apart.

A further drawback of the coupling device known from GB 2211258 A is the fact that it will be relatively expensive due to the fairly labourious implementation of the components required for the bayonet fastening.

It is an object of the present invention to provide a coupling device for connecting and/or closing off fluid lines which eliminates the abovementioned drawbacks or at least reduces them by offering at least improved protection against the male and the female coupling elements flying apart during the uncoupling of the coupling device, whether knowingly or inadvertently, due to at least partly rotating the bayonet fastening open as a result of an uncontrolled force, for example as a result of torsion and/or vibrations, which acts on the male and/or female coupling elements, in combination with the pressure under which these elements are when there is still fluid present, for example a liquid or a gas, in at least one connected fluid line.

It is a further object of the present invention to provide a coupling device which can establish the abovementioned improved protection in a simple and inexpensive manner.

At least one of these objects is achieved by a coupling device according to the present invention, wherein the labyrinth-like guide is a slot in the wall of the female coupling element. By providing, for example by means of grinding and/or milling, a slot in the wall of the female coupling element, it is possible by means of a simple and inexpensive modification of a standard cam lock coupling and the use of a bayonet fastening to produce a coupling device which offers improved protection against the male coupling element flying out of the female coupling element. In this case, it is possible to position the radial projection, which is usually used to connect the male coupling element to the female coupling element by means of a connection, for example a small chain or a cord, in the labyrinth-like guide of the bayonet fastening. Thus, only the female coupling element of a further standard cam lock coupling has to be adapted which results in an inexpensive and/or quickly employable solution. As a result, a coupling device is provided by means of which it is possible to prevent the male coupling element from becoming detached from the female coupling element. If the arm of the female coupling element is brought from the second position to the first position, whether knowingly or inadvertently, when a fluid, for example a liquid or a gas, flows through the fluid lines, the male and the female coupling element will be moved in opposite directions due to the pressure which the fluid exerts on the coupling elements. As a result, the radial projection of the male coupling element will be moved into a widening which extends in the direction of the free circumferential edge of the female coupling element of the guide part of the labyrinth-like guide and which is directed substantially in the circumferential direction. As a result, a movement of the radial projection and thus a movement of the male coupling element substantially in the axial direction is limited and the radial projection is prevented from flying out of the labyrinth-like guide.

If an uncontrolled force directed in the axial and/or in the circumferential direction then unexpectedly acts on the coupling elements of the coupling device, for example as a result of torsion in the flexible and/or semi-flexible fluid lines, such as hoses, connected to the male and the female coupling element, at least one stop can come into overlapping contact with the radial projection of the male coupling element. Consequently, the movement of the radial projection and thus of the male coupling element substantially in the circumferential direction will be limited to such a degree that the radial projection cannot move past the stop and therefore cannot get outside the labyrinth-like guide. This makes it possible to prevent the male coupling element from flying off the female coupling element and causing injury to a person and/or damage to the infrastructure which is situated in the vicinity of the coupling device.

If a fluid line is to be closed off, the male or the female coupling element acts as a closure element, for example a cap. In an analogous way to that described above, the coupling device according to the present invention can prevent, for example, vibrations which may be caused in the closed-off fluid line, for example, by a connected pump, from causing the closure element to fly off the coupling device.

In an embodiment of the coupling device according to the present invention, the guide part extending in the circumferential direction is widened in the direction facing away from the free circumferential edge to form a first stop in such a manner that, when the male and female coupling elements are accommodated completely inside one another, the radial projection and the first stop overlap one another. Thus, it is possible to prevent the radial projection from moving in the circumferential direction through the labyrinth-like guide while the at least one arm is situated in the second position due to a force which is substantially directed in the circumferential direction.

In an embodiment of the coupling device according to the present invention, the guide part extending in the circumferential direction is widened in a direction facing the free circumferential edge to form a second stop in such a manner that when the male and female coupling elements are not accommodated completely inside one another, the radial projection and the second stop overlap one another. Thus, it is possible to prevent the radial projection from moving in the circumferential direction through the labyrinth-like guide while the at least one arm is situated in the first position as a result of a force which is substantially directed in the circumferential direction, and the male coupling element from flying off the female coupling element.

In an embodiment of the coupling device according to the present invention, the arm can be brought from the first into the second position when the male and female coupling elements are accommodated completely inside one another, wherein the radially extending locking element of the arm can engage with the at least one continuous recess provided along the outer circumference of the male coupling element. Thus, it is possiblethat after the bayonet fastening has been brought about correctly, the at least one continuous recess of the male coupling element provided along the outer circumference is arranged opposite the radially extending locking element of the arm and to bring about the connection of the male and the female coupling element in a correct and safe manner. This measure provides a coupling device with improved protection.

In an embodiment of the coupling device according to the present invention, the female and/or the male coupling element comprises a metal and/or a metal alloy. The use of metal offers the possibility of increasing the durability of the coupling elements and thus to increase the service life of the coupling device. This can have a positive effect on reducing the total costs of the coupling device. The choice of metal used will partly be determined by the properties of the metal and partly by the costs. For applications where the costs have to be as low as possible, stainless steel and/or carbon-containing ferro metals and/or brass are a suitable choice. Due to the hardness of stainless steel and/or a carbon-containing ferro metal, their use results in satisfactory durability which in turn leads to a long service life of the coupling device. Brass is not only a suitable choice due to its hardness, but also due to its good self-lubricating properties. For applications where costs at least are less important, titanium is a suitable choice, for example. This would make it possible to choose a thinner wall thickness of the coupling elements.

In an embodiment of the coupling device according to the present invention, the female and/or the male coupling element comprises a fibre-reinforced plastic. A suitable choice could be, for example, a plastic which has been reinforced with aramide fibre. This makes it possible to further minimize the weight of the coupling device without having to make significant concessions to strength or durability.

In an embodiment of the coupling device according to the present invention, the wall of the female coupling element has a thickness which is in the range from 1-10 mm, and is preferably 5 mm. Thus, depending on the material used, a wall is provided which has sufficient strength to withstand the forces which act on the coupling elements when in use.

According to another aspect of the present invention, a line path is provided, comprising at least two fluid lines which are connected to one another by means of a coupling device according to one of the preceding claims.

According to another aspect of the present invention, a line end section is provided, comprising at least one fluid line and a closure cap which are connected to one another by a coupling device according to one of the preceding claims. The closure cap may be formed by the male or the female coupling element of the coupling device. If the male coupling element is configured as the closure cap, it can be fitted and secured in the female coupling element of the coupling device in the same way as described above. Thus, a line end section is provided, wherein the coupling device according to the present invention prevents the closure element from flying out of the coupling device due to, for example, vibrations in the closed fluid line caused, for example, by a connected pump.

Although the invention will be described with reference to specific embodiments, the invention is not limited to the illustrated embodiments. The invention will be described by means of measures, wherein explicit advantages may be mentioned, but wherein there may also be implicit advantages. Any of these measures may be the subject-matter of the invention of this application or of a divisional application, some combinations of which measures have been described and/or illustrated explicitly in this description, but which may also be described implicitly. Although the figures show explicit combinations of measures, it will be clear to those skilled in the art that a number of these measures can also be applied separate from one another.
Fig. 1 shows an exploded view of an embodiment of the coupling device according to the present invention.
Fig. 2 shows a partly cut-away front view of a coupling device in the operating state according to the embodiment shown in Fig. 1.
Fig. 3 shows a partly cut-away front view of the embodiment of the coupling device as shown in the preceding figures, wherein the operation of the stop in the labyrinth-like guide is illustrated diagrammatically.

The figures are not necessarily drawn to scale. Identical or similar components in the various figures may have the same reference numerals.

Although the following figures in each case show a female coupling element 3 with a labyrinth-like guide 12 and a male coupling element 2 with a radial projection 6, it will be clear to those skilled in the art that the female coupling element may also have a radial projection which can form a bayonet fastening together with a labyrinth-like guide of the male coupling element. Furthermore, fluid lines 60 are connected to both the male coupling element 2 and to the female coupling element 3 in the figures shown. It will be clear to those skilled in the art that the following description in each case also applies to the case where a fluid line 60 is connected to one of two coupling elements and the other coupling element is configured as a closure element, for example a cap.

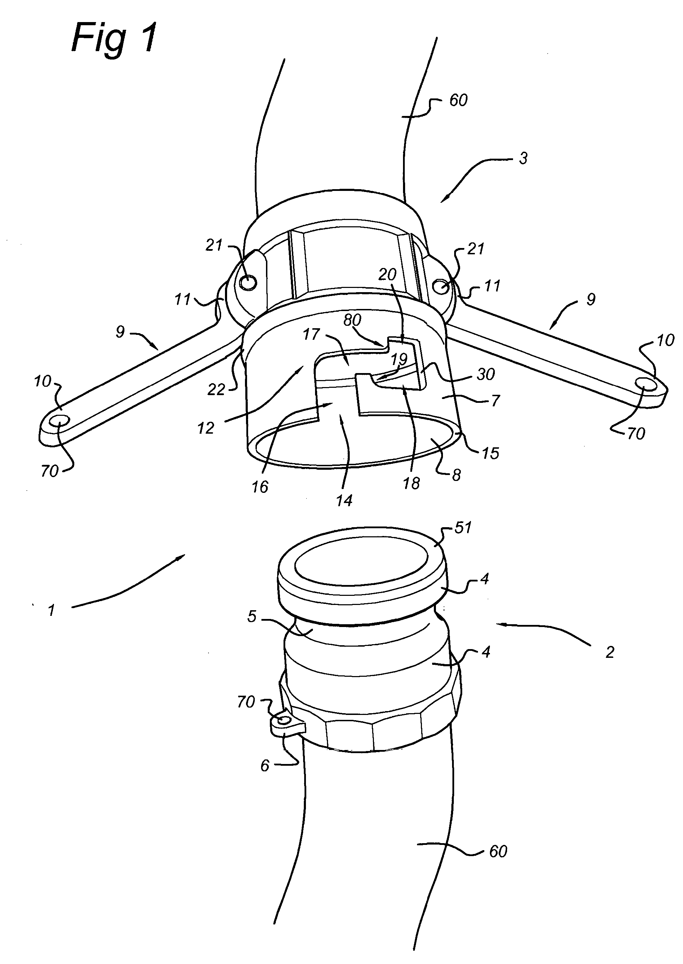

Fig. 1 shows an exploded view of an embodiment of a male coupling element 2 and a female coupling element 3 of a coupling device 1 according to the present invention, wherein both the male and the female coupling element are connected to a fluid line 60, for example a hose.

The male coupling element 2 has a wall 4 having a substantially circular cross section. The wall 4 comprises at least one continuous recess 5 provided along the outer circumference and at least one substantially radially extending projection 6. In the illustrated embodiment, the radially extending projection 6 is provided with a recess 70 in which a connecting element, for example a small chain or cord, can be fitted by means of which the male coupling element 2 and the female coupling element 3 can be coupled to one another. The sole purpose of this connection is to keep the two coupling elements together as a pair.

The female coupling element 3 has a wall 7 having a substantially circular cross section, wherein the wall 7 surrounds a receiving space 8 in which the male coupling element 2 can be accommodated in a fitted manner. In the illustrated embodiment, the female coupling element 3 furthermore has two arms 9. At one end, the arms 9 comprise an operating element 10 and, at the opposite end, a radially extending locking element 11, for example a cam. The arms 9 are rotatably connected to the female coupling element 3 by means of a shaft 21. As is illustrated in figure 1, the arms 9 are in a first position in which the cams 11 are substantially outside the receiving space 8 of the female coupling element 3. As a result, the male coupling element 2 can freely be moved in and/or out of the receiving space 8, respectively. By rotation about the shafts 21, the arms 9 can be brought from the first position into the second position. In the second position, the cams 11 will extend substantially inside the receiving space 8 and engage in the at least one continuous recess 5 provided along the outer circumference in the wall 4 of the male coupling element 2. As a result, a connection is brought about between the female and the male coupling element.

The wall 7 of the female coupling element 3 furthermore comprises a labyrinth-like guide 12 which forms a bayonet fastening in collaboration with the radial projection 6 of the male coupling element 2. The labyrinth-like guide 12 in the wall 7 may be produced, for example, by grinding and/or milling. The labyrinth-like guide 12 has at least one entrance 14 which opens in a free circumferential edge 15 of the wall 7 of the female coupling element 3. The labyrinth-like guide 12 comprises at least one guide part 16 which extends substantially in the axial direction and at least one adjoining guide part 17 which extends substantially in the circumferential direction. The radial projection 6 of the male coupling element 2 can be positioned in the labyrinth-like guide 12 via the entrance 14 by means of displacements in the axial and/or circumferential direction. As a result, the bayonet fastening can be brought about.

In the illustrated embodiment, the guide part 17 extending in the circumferential direction comprises, in a direction facing away from the free circumferential edge 15, a first local widening 20 to form a first stop 80. In a direction facing towards the free circumferential edge 15, the guide part 17 extending in the circumferential direction comprises a second local widening 18 to form a second stop 19.

When the male and the female coupling element are accommodated completely inside one another, the radial projection 6 and the first stop 80 overlap one another. This makes it possible to prevent the radial projection 6 from moving through the labyrinth-like guide 12 when the arms 9 are in the second position, due to a force directed substantially in the circumferential direction.

When the male and female coupling element are not accommodated completely inside one another, the male and the female coupling element are moved in opposite directions and the radial projection 6 and the second stop 19 overlap one another, on account of a force which is substantially directed in the direction of the free circumferential edge 15. Consequently, it is possible to prevent the radial projection 6 from moving through the labyrinth-like guide 12 in the circumferential direction as a result of a force which is directed substantially in the circumferential direction, when the arms 9 are in the first position and the male coupling element 2 can fly out of the female coupling element 3.

In the embodiment shown in Fig. 1, when the male and female coupling elements are accommodated completely inside one another, the arms 9 can be brought in the second position when the radial projection 6 is situated in the local widening 20 of the labyrinth-like guide 12, because the continuous recess 5 provided along the outer circumference of the male coupling element 2 is then situated opposite the cams 11 in such a manner that these can engage with the recess 5. As a result, it is possible to ensure that the connection between the male and the female coupling element is brought about in a correct and safe manner after the bayonet fastening has been brought about correctly.

In the embodiment illustrated in Fig. 1, the labyrinth-like guide 12 is configured as a slot in the wall 7 of the female coupling element 3.

It is possible to provide the labyrinth-like guide 12 in the wall 7 of the female coupling element 3 during the production thereof. However, it is also possible to grind and/or mill the labyrinth-like guide 12 in a wall of a flange having a substantially circular cross section. In this case, it is important for the diameters of the flange and the female coupling element to correspond to one another so that the male coupling element can still be accommodated inside the female coupling element in a fitted manner. In this way, it is possible to produce a coupling device 1 according to the present invention by means of a simple and/or inexpensive modification of an existing standard cam lock coupling, that is to say without additional bayonet fastening. An advantage thereof is the fact that the male coupling element of the existing cam lock coupling can continue to be used without having to be modified further.

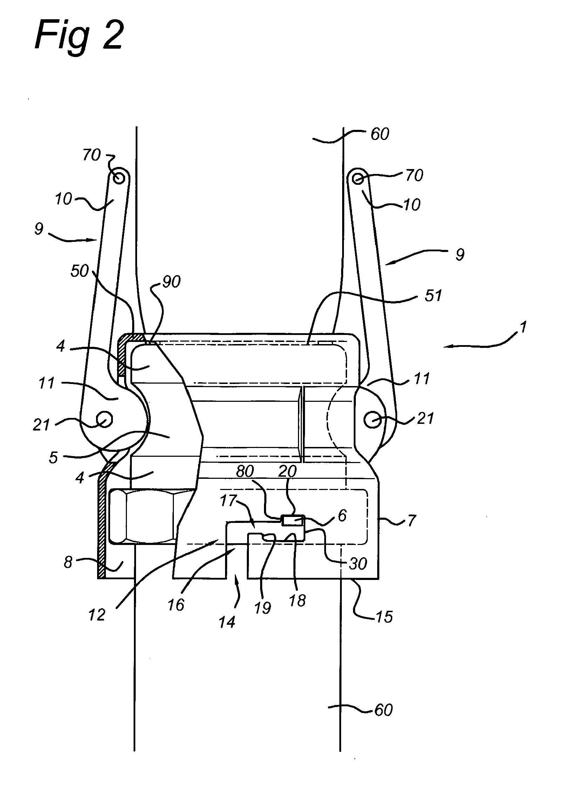

Fig. 2 shows the coupling device 1 in its position of use in which the male coupling element 2 is accommodated in the receiving space 8 of the female coupling element 3. The arms 9 have been moved from the first position to the second position by rotating them about the shafts 21. As is illustrated, the cams 11 in the second position extend substantially inside the receiving space 8 and engage with the continuous recess 5 provided along the outer circumference of the male coupling element 2. As a result, a connection is brought about between the female and the male coupling element. As is illustrated in Fig. 1, a free circumferential edge 51 of the male coupling element 2 is in this case brought into bearing contact with a packing element 90, for example a sealing ring. The sealing ring 90 is positioned between the free circumferential edge 51 and a seat 50 of the female coupling element in order to prevent or at least reduce leakage between these coupling elements.

When the arms 9 are in the second position, the radial projection 6, in the illustrated embodiment, is situated in the widening 20 of the guide part 16 which extends substantially in the circumferential direction. In this case, the radial projection 6 is in overlapping contact with the stop 80. Thus, a movement of the radial projection 6 is limited substantially in the circumferential direction. In another embodiment, the radial projection 6 could also be positioned in the widening 18 if the arms 9 are situated in the second position. A movement of the radial projection 6 directed substantially in the circumferential direction will in that case be limited by the overlapping contact between the stop 19 and the radial projection 6.

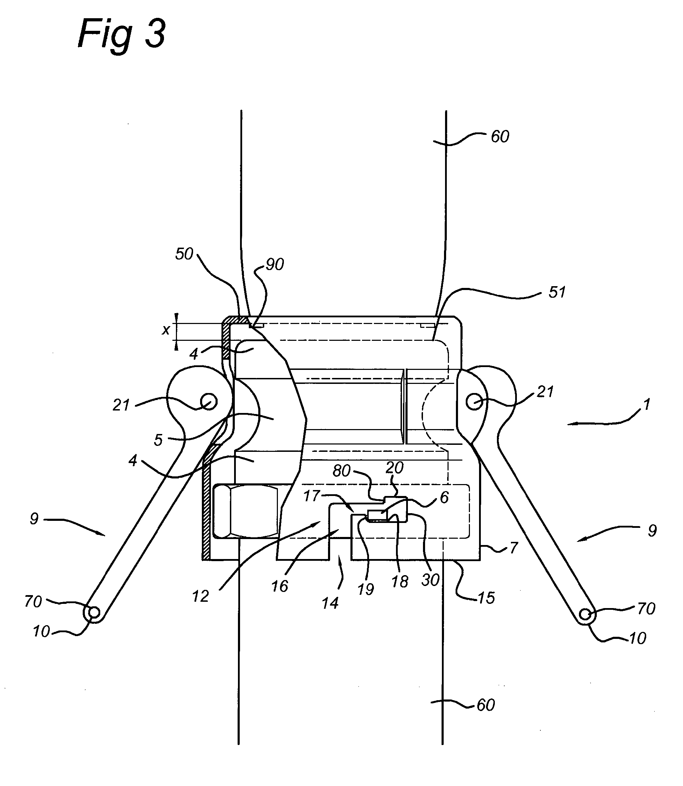

Fig. 3 shows the coupling device 1 with the arms 9 being in the first position. If in this case a fluid, for example a liquid or a gas, (still) runs through the connected fluid lines, the male coupling element 2 and the female coupling element 3 will be moved in opposite directions as a result of the pressure which the fluid exerts on the coupling elements. Thus, the radial projection 6 of the male coupling element 2 is moved into a widening 18 extending in the direction of the free circumferential edge 15 of the female coupling element 3 and forming part of the guide part 17 of the labyrinth-like guide 12 directed substantially in the circumferential direction. As a result thereof, a movement of the radial projection 6 and thus a movement of the male coupling element 2 is limited substantially in the axial direction. There is a distance (x) between the free circumferential edge 51 of the male coupling element 2 and the sealing ring 90 which rests on the seat 50 of the female coupling element 3. As a result thereof, fluid can leak from the coupling device 1, thus reducing the pressure in the fluid lines. The leaking of fluid is also an indication that the connection between the male and the female coupling elements is no longer completely intact.

If additionally an uncontrolled force directed in the axial and/or circumferential direction unexpectedly acts on the coupling elements of the coupling device 1, for example as a result of torsion in the flexible and/or semi-flexible fluid lines 60 connected to the male coupling element 2 and the female coupling element 3, such as for example hoses, the movement of the radial projection 6 and thus of the male coupling element 2 will be limited substantially in the circumferential direction in such a manner by the overlapping contact between the radial projection 6 and the stop 19 that the radial projection 6 cannot move past the stop 19 and thus cannot get out of the labyrinth-like guide 12. This will make it possible to prevent the male coupling element 2 from flying off the female coupling element 3.

In case the fluid line 60 is to be closed off, the male coupling element 2 or the female coupling element 3 functions as the closure element, for example a cap. In a way analogous to that described above, the coupling device 1 according to the present invention can prevent, for example, vibrations in the closed-off fluid line 60, for example caused by a connected pump, from causing the closure element to fly off the coupling device 1.

The present invention is not limited to the above embodiments which have been described as non-limiting examples. The scope of protection is determined by the meaning of the attached claims which allow for numerous modifications.

## Claims

1. Coupling device for connecting and/or closing off fluid lines, comprising:
- A male coupling element (2) having a substantially circular cross section, at least one continuous recess (5) provided around the outer circumference and at least one projection (6) which extends substantially radially;
- A female coupling element (3) which has a wall (7) with a substantially circular cross section which surrounds a receiving space (8) in which the male coupling element (2) can be accommodated in a fitted manner, wherein the female coupling element (3) has at least one arm (9) which, at one end, comprises an operating element (10) and, at an opposite end, at least one radially extending locking element (11), wherein the arm (9) is rotatably connected to the female coupling element (3), wherein the wall (7) has at least one recess through which the locking element (11) can extend into the receiving space (8), wherein the arm (9) can be brought into a first and a second position, wherein, in the first position, the locking element (11) is situated substantially outside the receiving space (8) and the male coupling element (2) can be brought freely into and/or out of the receiving space (8), wherein, in the second position, the locking element (11) extends substantially inside the receiving space (8) and engages with the at least one continuous recess (5) provided around the outer circumference of the male coupling element (2), as a result of which a connection between the coupling elements (2, 3) is established in the position in which the coupling elements (2, 3) are accommodated entirely inside one another;
- A bayonet fastening in which the wall (7) of the female coupling element (3) comprises at least a labyrinth-like guide (12), wherein the labyrinth-like guide (12) comprises at least one entrance (14) which opens in a free peripheral edge (15) of the wall (7), at least one guide part (16) which extends substantially in the axial direction from the entrance (14) and at least one guide part (17) which adjoins the axial guide part (16) and extends substantially in the circumferential direction, wherein the radial projection (6), via the entrance (14) in the axial guide part (16) and the guide part (17) extending in the circumferential direction, can be positioned in the labyrinth-like guide (12) in order to establish the bayonet fastening, wherein the guide part (17) which extends substantially in the circumferential direction is locally widened (18, 20) in the axial direction to form at least one stop (19, 80), wherein the male and female coupling elements accommodated inside one another can be brought into a position in which the radial projection (6) and the at least one stop (19, 80) overlap one another in such a manner that a movement of the male coupling element (2) substantially in the circumferential direction is limited and that it is possible to prevent an uncontrolled force directed in the axial and/or circumferential direction from taking the radial projection (6) past the at least one stop (19), **characterized in that** the labyrinth-like guide (12) is a slot in the wall (7) of the female coupling element (3).

2. Coupling device according to Claim 1, wherein the guide part (17) extending in the circumferential direction is widened (20) in a direction facing away from the free circumferential edge (15) to form a first stop (80) in such a manner that, when the male and female coupling elements are accommodated completely inside one another, the radial projection (6) and the first stop (80) overlap one another.

3. Coupling device according to Claim 1 or 2, wherein the guide part (17) extending in the circumferential direction is widened (18) in a direction facing the free circumferential edge (15) to form a second stop (19) in such a manner that when the male and female coupling elements are not accommodated completely inside one another, the radial projection (6) and the second stop (19) overlap one another.

4. Coupling device according to one of the preceding claims, wherein the arm (9) can be brought from the first into the second position when the male and female coupling elements are accommodated completely inside one another, wherein the radially extending locking element (11) of the arm (9) can engage with the at least one continuous recess (5) provided along the outer circumference of the male coupling element (2).

5. Coupling device according to any one of the preceding claims, wherein the female and/or the male coupling element comprises a metal and/or a metal alloy.

6. Coupling device according to any one of the preceding claims, wherein the female and/or the male coupling element comprises a fibre-reinforced plastic.

7. Coupling device according to any one of the preceding claims, wherein the wall (7) of the female coupling element (3) has a thickness which is in the range from 1-10 mm, and is preferably 5 mm.

8. Line path comprising at least two fluid lines (60) which are connected to one another by means of a coupling device (1) according to any one of the preceding claims.

9. Line end section comprising at least one fluid line (60) and a closure cap which are connected to one another by a coupling device (1) according to one of Claims 1-7.

## Patentansprüche

1. Kopplungsvorrichtung zum Verbinden und/oder Absperren von Fluidleitungen, umfassend:
- ein männliches Kopplungselement (2) mit einem im Wesentlichen kreisförmigen Querschnitt, mindestens einer durchgängigen Aussparung (5), welche um den äußeren Umfang vorgesehen ist, und mindestens einem Vorsprung (6), welcher sich im Wesentlichen radial erstreckt,
- ein weibliches Kopplungselement (3), welches eine Wand (7) mit einem im Wesentlichen kreisförmigen Querschnitt aufweist, welche einen aufnehmenden Raum (8) umgibt, in welchem das männliche Kopplungselement (2) in einer eingepassten Art und Weise untergebracht werden kann, wobei das weibliche Kopplungselement (3) mindestens einen Arm (9) aufweist, welcher an einem Ende ein Betätigungselement (10) und an dem gegenüberliegenden Ende mindestens ein sich radial erstreckendes Verriegelungselement (11) umfasst, wobei der Arm (9) drehbar mit dem weiblichen Kopplungselement (3) verbunden ist, wobei die Wand (7) mindestens eine Aussparung aufweist, durch welche sich das Verriegelungselement (11) in den aufnehmenden Raum (8) erstrecken kann, wobei der Arm (9) in eine erste und eine zweite Position gebracht werden kann, wobei in der ersten Position das Verriegelungselement (11) im Wesentlichen außerhalb des aufnehmenden Raums (8) angeordnet ist und das männliche Kopplungselement (2) frei in den und/oder aus dem aufnehmenden Raum (8) gebracht werden kann, wobei sich in der zweiten Position das Verriegelungselement (11) im Wesentlichen innerhalb des aufnehmenden Raums (8) erstreckt und sich mit der mindestens einen durchgängigen Aussparung (5), welche um den äußeren Umfang des männlichen Kopplungselements (2) vorgesehen ist, in Eingriff befindet, wobei dadurch als ein Ergebnis eine Verbindung zwischen den Kopplungselementen (2,3) in der Position eingerichtet wird, in welcher die Kopplungselemente (2,3) gänzlich ineinander untergebracht sind,
- eine Bajonett-Befestigung, bei welcher die Wand (7) des weiblichen Kopplungselements (3) mindestens eine labyrinthähnliche Führung (12) umfasst, wobei die labyrinthähnliche Führung (12) mindestens einen Eingang (14), welcher sich an einem freien Umfangsrand (15) der Wand (7) öffnet, mindestens einen Führungsteil (16), welcher sich im Wesentlichen in der axialen Richtung von dem Eingang (14) erstreckt, und mindestens einen Führungsteil (17), welcher an den axialen Führungsteil (16) grenzt und sich im Wesentlichen in der Umfangsrichtung erstreckt, umfasst, wobei der radiale Vorsprung (6) über den Eingang (14) in dem axialen Führungsteil (16) und dem sich in der Umfangsrichtung erstreckenden Führungsteil (17) in der labyrinthähnlichen Führung (12) positioniert werden kann, um die Bajonett-Befestigung einzurichten, wobei der Führungsteil (17), welcher sich im Wesentlichen in der Umfangsrichtung erstreckt, in der axialen Richtung lokal geweitet (18,20) ist, um mindestens einen Anschlag (19,80) auszubilden, wobei das männliche und weibliche Kopplungselement, welche ineinander untergebracht sind, in eine Position gebracht werden können, in welcher der radiale Vorsprung (6) und der mindestens eine Anschlag (19,80) einander in einer derartigen Art und Weise überlappen, dass eine Bewegung des männlichen Kopplungselements (2) in der Umfangsrichtung im Wesentlichen begrenzt ist und dass es möglich ist, zu verhindern, dass eine unkontrollierte Kraft, welche in der axialen und/oder Umfangsrichtung gerichtet ist, den radialen Vorsprung (6) über den mindestens einen Anschlag (19) führt, **dadurch gekennzeichnet, dass** die labyrinthähnliche Führung (12) ein Schlitz in der Wand (7) des weiblichen Kopplungselements (3) ist.

2. Kopplungsvorrichtung nach Anspruch 1, wobei der sich in Umfangsrichtung erstreckende Führungsteil (17) in einer Richtung abgewandt von dem freien Umfangsrand (15) geweitet (20) ist, um einen ersten Anschlag (80) in einer derartigen Art und Weise auszubilden, dass, wenn das männliche und weibliche Kopplungselement vollständig ineinander untergebracht sind, der radiale Vorsprung (6) und der erste Anschlag (80) einander überlappen.

3. Kopplungsvorrichtung nach Anspruch 1 oder 2, wobei der sich in Umfangsrichtung erstreckende Führungsteil (17) in einer Richtung gegenüber dem freien Umfangsrand (15) geweitet (18) ist, um einen zweiten Anschlag (19) in einer derartigen Art und Weise auszubilden, dass, wenn das männliche und weibliche Kopplungselement nicht vollständig ineinander untergebracht sind, der radiale Vorsprung (6) und der zweite Anschlag (19) einander überlappen.

4. Kopplungsvorrichtung nach einem der vorhergehenden Ansprüche, wobei der Arm (9) von der ersten in die zweite Position gebracht werden kann, wenn das männliche und weibliche Kopplungselement vollständig ineinander untergebracht sind, wobei das sich radial erstreckende Verriegelungselement (11) des Arms (9) mit der mindestens einen durchgängigen Aussparung (5), welche entlang dem äußeren Umfang des männlichen Kopplungselements (2) vorgesehen ist, in Eingriff gebracht werden kann.

5. Kopplungsvorrichtung nach einem der vorhergehenden Ansprüche, wobei das weibliche und/oder das männliche Kopplungselement ein Metall und/oder eine Metalllegierung umfasst.

6. Kopplungsvorrichtung nach einem der vorhergehenden Ansprüche, wobei das weibliche und/oder das männliche Kopplungselement einen faserverstärkten Kunststoff umfasst.

7. Kopplungsvorrichtung nach einem der vorhergehenden Ansprüche, wobei die Wand (7) des weiblichen Kopplungselements (3) eine Dicke aufweist, welche in dem Bereich von 1 bis 10 mm liegt und vorzugsweise 5 mm beträgt.

8. Leitungspfad umfassend mindestens zwei Fluidleitungen (60), welche miteinander mittels einer Kopplungsvorrichtung (1) nach einem der vorhergehenden Ansprüche verbunden sind.

9. Leitungsendabschnitt, umfassend mindestens eine Fluidleitung (60) und eine Verschlusskappe, welche miteinander mittels einer Kopplungsvorrichtung (1) nach einem der Ansprüche 1 bis 7 verbunden sind.

## Revendications

1. Dispositif de raccordement pour connecter et/ou fermer des lignes de fluide, comprenant:
- un élément de raccordement mâle (2) ayant une section transversale sensiblement circulaire, au moins un évidement continu (5) agencé autour de la périphérie extérieure et au moins une saillie (6) qui s'étend sensiblement radialement;
- un élément de raccordement femelle (3) qui a une paroi (7) ayant une section transversale sensiblement circulaire, qui entoure un espace de réception (8) dans lequel l'élément de raccordement mâle (2) peut être reçu d'une manière ajustée, dans lequel l'élément de raccordement femelle (3) a au moins un bras (9) qui, à une extrémité, comprend un élément d'actionnement (10) et, à une extrémité opposée, au moins un élément de verrouillage s'étendant radialement (11), dans lequel le bras (9) est relié de façon rotative à l'élément de raccordement femelle (3), dans lequel la paroi (7) présente au moins un évidement à travers lequel l'élément de verrouillage (11) peut s'étendre dans l'espace de réception (8), dans lequel le bras (9) peut être amené dans une première et une seconde position, dans lequel, dans la première position, l'élément de verrouillage (11) est situé sensiblement à l'extérieur de l'espace de réception (8) et l'élément de raccordement mâle (2) peut être amené librement dans et/ou en dehors de l'espace de réception (8), dans lequel, dans la seconde position, l'élément de verrouillage (11) s'étend sensiblement à l'intérieur de l'espace de réception (8) et vient en prise avec le au moins un évidement continu (5) agencé autour de la circonférence extérieure de l'élément de raccordement mâle (2), le résultat étant qu'une connexion entre les éléments de raccordement (2, 3) est établie dans la position dans laquelle les éléments de raccordement (2, 3) sont reçus entièrement à l'intérieur l'un de l'autre;
- une fixation à baïonnette, dans laquelle la paroi (7) de l'élément de raccordement femelle (3) comprend au moins un guide analogue à un labyrinthe (12), dans lequel le guide analogue à un labyrinthe (12) comprend au moins une entrée (14) qui s'ouvre dans un bord périphérique libre (15) de la paroi (7), au moins une partie de guidage (16) qui s'étend sensiblement dans la direction axiale à partir de l'entrée (14) et au moins une partie de guidage (17) qui rejoint la partie de guidage axial (16) et s'étend sensiblement dans la direction circonférentielle, dans lequel la saillie radiale (6), via l'entrée (14) dans la partie de guidage axial (16) et la partie de guidage (17) s'étendant dans la direction périphérique, peut être positionnée dans le guide analogue à un labyrinthe (12) afin d'établir la fixation à baïonnette, dans lequel la partie de guidage (17) qui s'étend sensiblement dans la direction circonférentielle est localement élargie (18, 20) dans la direction axiale pour former au moins une butée (19, 80), dans lequel les éléments de raccordement mâle et femelle reçus à l'intérieur l'un de l'autre peuvent être amenés dans une position dans laquelle la saillie radiale (6) et la au moins une butée (19, 80) se chevauchent l'une l'autre de telle manière qu'un déplacement de l'élément de raccordement mâle (2) sensiblement dans la direction circonférentielle est limité et qu'il est possible d'empêcher une force non commandée dirigée dans la direction axiale et/ou circonférentielle d'amener la saillie radiale (6) au-delà de la au moins une butée (19), **caractérisé en ce que** le guide analogue à un labyrinthe (12) est une fente dans la paroi (7) de l'élément de raccordement femelle (3).

2. Dispositif de raccordement selon la revendication 1, dans lequel la partie de guidage (17) s'étendant dans la direction circonférentielle est élargie (20) dans une direction opposée au bord circonférentiel libre (15) pour former une première butée (80) d'une manière telle que, lorsque les éléments de raccordement mâle et femelle sont reçus complètement à l'intérieur l'un de l'autre, la saillie radiale (6) et la première butée (80) se chevauchent l'une l'autre.

3. Dispositif de raccordement selon la revendication 1 ou 2, dans lequel la partie de guidage (17) s'étendant dans la direction circonférentielle est élargie (18) dans une direction dirigée vers le bord périphérique libre (15) pour former une seconde butée (19) d'une manière telle que lorsque les éléments de raccordement mâle et femelle ne sont pas reçus complètement à l'intérieur l'un de l'autre, la saillie radiale (6) et la seconde butée (19) se chevauchent l'une l'autre.

4. Dispositif de raccordement selon l'une quelconque des revendications précédentes, dans lequel le bras (9) peut être amené de la première à la seconde position lorsque les éléments de raccordement mâle et femelle sont reçus complètement à l'intérieur l'un de l'autre, dans lequel l'élément de verrouillage s'étendant radialement (11) du bras (9) peut venir en prise avec le au moins un évidement continu (5) agencé le long de la circonférence extérieure de l'élément de raccordement mâle (2).

5. Dispositif de raccordement selon l'une quelconque des revendications précédentes, dans lequel l'élément de raccordement femelle et/ou mâle est constitué d'un métal et/ou d'un alliage métallique.

6. Dispositif de raccordement selon l'une quelconque des revendications précédentes, dans lequel l'élément de raccordement femelle et/ou mâle est constitué d'une matière plastique renforcée par des fibres.

7. Dispositif de raccordement selon l'une quelconque des revendications précédentes, dans lequel la paroi (7) de l'élément de raccordement femelle (3) a une épaisseur qui est dans la plage de 1 à 10 mm, et de préférence est de 5 mm.

8. Trajet de ligne comprenant au moins deux lignes de fluide (60) qui sont raccordées l'une à l'autre par l'intermédiaire d'un dispositif de raccordement (1) selon l'une quelconque des revendications précédentes.

9. Tronçon d'extrémité de ligne comprenant au moins une ligne de fluide (60) et un capuchon de fermeture, qui sont connectés l'un à l'autre par un dispositif de raccordement (1) selon l'une des revendications 1 à 7.
